# EUROPÄISCHE PATENTSCHRIFT

(11) **EP 1 974 854 B1**
(45) Veröffentlichungstag und Bekanntmachung des Hinweises auf die Patenterteilung: **01.09.2010**
(21) Anmeldenummer: 08002341.9
(22) Anmeldetag: 08.02.2008
(51) Int. Cl.: B24B 9/14, G01B 5/20, G02C 13/00

(54) **Verfahren zum Abtasten der Kontur von Brillenfassungsöffnungen und Vorrichtung zum Abtasten der Kontur von Brillenfassungsöffnungen für das Umfangsschleifen von Brillengläsern**
Method for scanning the contours of openings in a spectacles frame and device for scanning the contours of openings in a spectacles frame for the peripheral grinding of spectacles lenses
Procédé de balayage du contour d'ouvertures de monture de lunettes et dispositif de balayage du contour d'ouvertures de monture de lunettes pour le meulage périphérique de verres de lunettes

(30) Priorität: 30.03.2007 DE 102007015808
(43) Veröffentlichungstag der Anmeldung: 01.10.2008
(73) Patentinhaber: Buchmann Deutschland GmbH, 40231 Düsseldorf (DE)
(72) Erfinder: Beil, Sebastian, 40591 Düsseldorf (DE); Tepaß, Peter, 46240 Bottrop (DE); Neff, Matthias, 40764 Langenfeld (DE); Pena-Feldmann, Sebastian, 50733 Köln (DE)
(74) Vertreter: Christophersen, Ulrich Rudolf

(56) Entgegenhaltungen:
- EP-A- 0 238 877
- EP-A- 1 050 373
- DE-A1- 2 162 980
- DE-A1- 4 041 912
- DE-A1- 4 214 395

## Beschreibung

Die Erfindung betrifft ein Verfahren zum dreidimensionalen Abtasten der Kontur von Brillenfassungsöffnungen für das Umfangsschleifen von Brillengläsern sowie eine Abtastvorrichtung mit einer Einspannvorrichtung für die Brillenfassung, wenigstens einem in der Nut in der Brillenfassungsöffnung anliegenden, relativ zur Brillenfassungsöffnung drehbaren und relativ zur Brillenfassungsöffnung radial und senkrecht dazu in Richtung der Z-Achse einstellbaren Taststift, einer Radialpositionssensoreinheit zum Aufnehmen der Radialbewegung des Taststifts relativ zur Brillenfassungsöffnung, einer Z-Achsenpositionssensoreinheit zum Aufnehmen der Position des Taststifts senkrecht zur Brillenfassungsebene, einer Winkelpositionssensoreinheit zum Aufnehmen der Winkelposition zu jeder Radial- und Z-Achsenposition und einer Auswerte- und Steuereinheit, die aus den Ausgangssignalen der Radialpositionssensoreinheit, der Z-Achsenpositionssensoreinheit und der Winkelpositionssensoreinheit die Kontur der Brillenfassungsöffnung berechnet, woraus dann Steuerbefehle für eine CNCgesteuerte Vorrichtung zum Umfangsbearbeiten von Brillengläsern erzeugt werden.

Eine Vorrichtung zum Abtasten der Kontur von Brillenfassungsöffnungen der eingangs erwähnten Art ist in der EP 0 238 877 A2 beschrieben.

Das Abtasten der Kontur von Brillenfassungsöffnungen soll möglichst schnell und dennoch genau erfolgen, um die Vorteile der schnellen und genauen Umfangsbearbeitung von Brillengläsern mittels einer CNC-gesteuerten Brillenglasrandbearbeitungsmaschine ausnutzen zu können. Dieses Abtasten der Kontur von Brillenfassungsöffnungen darf jedoch nicht so schnell erfolgen, dass der Taststift der Kontur der Brillenfassungsöffnung nicht folgen kann und abhebt bzw. aus der Fassungsnut herausfällt und darf auch nicht so schnell erfolgen, dass beim Abtasten der Kontur der Brillenfassungsöffnung eine Verformung der Brillenfassung eintritt, was insbesondere bei leichten Brillenfassungen aus Metall oder dünnen Kunststofffassungen eintreten kann. Insbesondere bei diesen leichten Metallbrillenfassungen oder dünnen Kunststofffassungen ist ein zu festes Einspannen der Brillenfassung zu vermeiden, da dies ebenfalls zu einer Verformung der Brillenfassung führen kann. Des Weiteren kann es insbesondere bei sehr eckig geformten oder stark durchmuschelten Brillenfassungen zu Verformungen kommen, und der Taststift kann in diesem Fall sehr leicht aus der Fasungsnut herausfallen.

Um dieses Problem zu lösen, wurde bereits vorgeschlagen, den Taststift mit einer Folgesteuerung auszustatten, die berührend oder berührungslos ein Nachführen des Taststifts beim Abtasten der Kontur von Brillenfassungsöffnungen bewirkt und so eingestellt ist, dass durch den Taststift auf die Brillenfassung nur eine sehr geringe Kraft ausgeübt wird, die einerseits ausreicht, dass der Taststift der Kontur der Brillenfassungsöffnung immer folgt und andererseits dafür sorgt, dass die auf die Brillenfassung ausgeübte Kraft stets unterhalb eines vorgegebenen Wertes bleibt. Derartige, mit einer Folgesteuerung ausgestattete Abtastvorrichtungen sind in der EP 0 291 378 A1, der DE 38 14 697 A1, der DE 40 41 912 A1, der DE 41 39 712 A1 und in der DE 42 14 395 A1 beschrieben.

Diese bekannten Vorrichtungen sind sowohl hinsichtlich des Aufbaus der Folgesteuerungsvorrichtung als auch ihrer Steuerung aufwendig, insbesondere, wenn dadurch eine Beschleunigung des Abtastvorgangs erreicht werden soll.

In der EP 1 050 373 A2 ist ebenfalls eine Folgesteuerung für den Taststift beschrieben, mittels derer die Radialbewegung des Taststifts in Abhängigkeit vom jeweiligen Radiusvektor, insbesondere der Änderung des Radiusvektors, geregelt wird, indem das Drehmoment des Radialantriebs des Taststifts vergrößert wird, wenn sich der Radiusvektor vergrößert und das Drehmoment des Radialantriebs des Taststifts vermindert wird, wenn der Radiusvektor kürzer wird.

Auch bei dieser Vorrichtung ist der apparative und Steuerungsaufwand hoch, ohne dass eine wirksame Beschleunigung oder eine erhöhte Abtastsicherheit des Abtastvorgangs erreicht werden.

Der Erfindung liegt die Aufgabe zu Grunde, ein Verfahren zum Abtasten der Kontur von Brillenfassungsöffnungen für das Umfangsschleifen von Brillengläsern sowie eine geeignete Vorrichtung zu schaffen, die einen geringen apparativen und Steuerungsaufwand erfordern und es erlauben, die Abtastgeschwindigkeit und die Abtastsicherheit zu erhöhen.

Ausgehend von dieser Aufgabenstellung wird ein Verfahren zum Abtasten der Kontur von Brillenfassungsöffnungen für das Umfangsschleifen von Brillengläsern mittels einer Abtastvorrichtung der eingangs erwähnten Art vorgeschlagen, mit dem erfindungsgemäß die Drehgeschwindigkeit des Taststifts relativ zur Brillenfassungsöffnung in Abhängigkeit von der Radialgeschwindigkeit oder der Radialbeschleunigung und/oder der Geschwindigkeit oder Beschleunigung in Richtung der Z-Achse des Taststifts durch die Auswerte- und Steuereinheit so geregelt wird, dass die Radialgeschwindigkeit oder die Radialbeschleunigung und/oder die Geschwindigkeit oder Beschleunigung in Richtung der Z-Achse innerhalb vorgegebener Grenzen bleiben.

Die Erfindung geht von der Überlegung aus, dass die Drehgeschwindigkeit erhöht werden kann, wenn die Radialgeschwindigkeit oder die Radialbeschleunigung und/oder die Geschwindigkeit oder Beschleunigung in Richtung der Z-Achse gering sind, während bei großer Radialgeschwindigkeit oder Radialbeschleunigung und/oder bei großer Geschwindigkeit oder Beschleunigung in Richtung der Z-Achse die Drehgeschwindigkeit verringert wird, um zu erreichen, dass der Taststift stets mit einer konstanten, geringen Kraft in der Facettennut anliegt, ohne aus der Facettennut abzuheben und ohne zu große Kräfte auf die Brillenfassung auszuüben, so dass sich in der Summe eine Erhöhung der Abtastgeschwindigkeit und der Abtastgenauigkeit ergeben.

Um dies zu erreichen, genügt es, die Auswerte- und Steuereinheit so zu programmieren, dass sie die Radialgeschwindigkeit oder die Radialbeschleunigung und/oder die Geschwindigkeit oder Beschleunigung in Richtung der Z-Achse aus der jeweiligen Radialposition und/oder Z-Achsenposition des Taststifts ermittelt, entsprechende Steuerbefehle erzeugt und die Drehgeschwindigkeit des Taststifts entsprechend regelt. Die in der EP 0 238 877 A2 beschriebene Abtastvorrichtung bleibt völlig unverändert, da es genügt, die Auswerte- und Steuereinheit entsprechend zu programmieren. Gegenüber dem vorstehend referierten Stand der Technik ist somit keinerlei apparativer Aufwand zu betreiben und die Auswerte- und Steuereinheit lässt sich auf einfache Weise entsprechend programmieren.

Die Programmierung kann so erfolgen, dass die Drehgeschwindigkeit des Taststifts relativ zur Brillenfassungsöffnung vermindert wird, wenn die Radialgeschwindigkeit und/oder die Geschwindigkeit in Richtung der Z-Achse bei sich vergrößerndem Radius und/oder der Z-Achswert des Taststifts zunehmen. Des Weiteren kann die Drehgeschwindigkeit des Taststifts auch vermindert werden, wenn die Radialgeschwindigkeit und/oder die Geschwindigkeit in Richtung der Z-Achse nach einem Nulldurchgang und sich verkleinerndem Radius und /oder Z-Achswert zunehmen

Da die Auswertung der Positionsdaten und die Regelung der Drehgeschwindigkeit in Echtzeit hohe Anforderungen an die Ausleseelektronik und das Rechnerprogramm der Auswerte- und Steuereinheit stellt, ist es möglich, dieses Problem zu vermeiden, indem ein erstes Abtasten der dreidimensionalen Kontur der Brillenfassung mit geregelt veränderlicher Drehgeschwindigkeit des Taststifts so durchgeführt wird, dass der Taststift während eines Umlaufs mit einem einstellbaren Druck in der Brillenfassungsöffnung, ohne aus der Nut abzuheben und/oder eine unzulässige Verformung der Brillenfassung zu bewirken, anliegt, wobei gewisse Ungenauigkeiten in Kauf genommen werden. Daraus berechnet die Auswerte- und Steuereinheit eine optimale Abtastgeschwindigkeit, mit der ein zweites, besonders genaues Abtasten mit dieser optimalen, konstanten Abtastgeschwindigkeit erfolgt. Obwohl hierbei das Abtasten in zwei Durchläufen erfolgt, ist damit einerseits eine verbesserte Genauigkeit verbunden, ohne dass der apparative und rechnerische Aufwand übermäßig steigen und lässt sich die Abtastgeschwindigkeit gegenüber bekannten Vorrichtungen steigern, weil bei diesen Abtastvorrichtungen häufig drei oder mehr Durchläufe mit jedes Mal verminderter Geschwindigkeit erforderlich sind, bis eine einwandfreie Abtastung, ohne dass der Taststift aus der Nut abhebt und eine unzulässige Verformung der Brillenfassung eintritt, erreicht wird.

Zur Lösung der eingangs erwähnten Aufgabe dient auch die in der EP 0 238 877 A2 beschriebenen Abtastvorrichtung, deren Auswerte- und Steuereinheit dazu eingerichtet ist, aus den Ausgangssignalen der Radialpositionssensoreinheit und/oder der Z-Achsenpositionssensoreinheit und der Winkelpositionssensoreinheit die dreidimensionale Kontur der Brillenfassungsöffnung und die Radialgeschwindigkeit oder die Radialbeschleunigung und/oder die Geschwindigkeit oder Beschleunigung in Richtung der Z-Achse des Taststifts relativ zur Brillenfassungsöffnung zu berechnen und die die Drehgeschwindigkeit des Taststifts relativ zur Brillenfassungsöffnung in Abhängigkeit von der Radialgeschwindigkeit oder der Radialbeschleunigung und/oder der Geschwindigkeit oder Beschleunigung in Richtung der Z-Achse des Taststifts relativ zur Brillenfassungsöffnung so regelt, dass die Radialgeschwindigkeit oder die Radialbeschleunigung und/oder die Geschwindigkeit oder Beschleunigung in Richtung der Z-Achse innerhalb vorgebbarer Grenzen bleiben.

Die Auswerte- und Steuereinheit kann dabei so programmiert sein, dass sie die Drehgeschwindigkeit des Taststifts relativ zur Brillenfassungsöffnung herabregelt, wenn die Radialgeschwindigkeit und/oder die Geschwindigkeit in Richtung der Z-Achse des Taststifts bei sich vergrößerndem Radius und/oder Z-Achswert zunehmen und die Drehgeschwindigkeit des Taststifts relativ zur Brillenfassungsöffnung herabregelt, wenn die Radialgeschwindigkeit und/oder die Geschwindigkeit oder Beschleunigung in Richtung der Z-Achse des Taststifts nach einem Nulldurchgang und sich verkleinerndem Radius und/oder Z-Achswert zunehmen.

Des Weiteren kann die Auswerte- und Steuereinheit vorzugsweise so programmiert sein, dass sie die Drehgeschwindigkeit so regelt, dass der Taststift während eines Umlaufs mit einem einstellbaren Druck in der Nut der Brillenfassungsöffnung anliegt, so dass der Taststift weder aus der Nut abhebt, noch eine unzulässige Verformung der Brillenfassung eintreten.

Vorzugsweise werden die Radial- und Z-Achswerte zusammen in der Weise berücksichtigt, dass die Auswerte- und Steuereinheit die Vektorresultierende dieser Werte berechnet und die Drehgeschwindigkeit des Taststifts entsprechend regelt.

Die Erfindung wird nachstehend anhand eines in der Zeichnung dargestellten Ausführungsbeispiels des Näheren erläutert. In der Zeichnung zeigen:
- Fig. 1: die Draufsicht auf das Brillengestell und die drehbare Platte,
- Fig. 2: den Eingriff des fingerartigen Taststifts in einen Abschnitt der Nut des Brillengestells,
- Fig. 3: im Vertikalschnitt die Einrichtung nach der Erfindung und
- Fig. 4: eine Einzelheit des unteren Endes der längsverschieblichen vertikalen Taststange.

Die Vorrichtung nach der Erfindung weist einen runden Rahmen auf, der aus einem L-förmigen Profilstück 2 gebildet ist, dessen horizontaler Schenkel 3 auf Stützen 4 ruht, die mit ihrem Fuß 5 auf einer stationären Unterlage 6 aufsitzen. Auf dem horizontalen Schenkel 3 des Profilstückes 2 liegt der Rand 7 einer runden Platte 8 auf, deren Kante 9 an dem senkrechten Schenkel 10 geführt ist. Die Platte 8 kann um ihre vertikale Mittelachse M in Richtung des Pfeils 11 gedreht werden. Hierzu dient ein an der Stütze 41 vorgesehener Motor 12, dessen Antriebswelle 13 in geeigneter Weise in einem entsprechendem Teil der Platte 8 eingreift, um diese in horizontaler Ebene zu drehen.

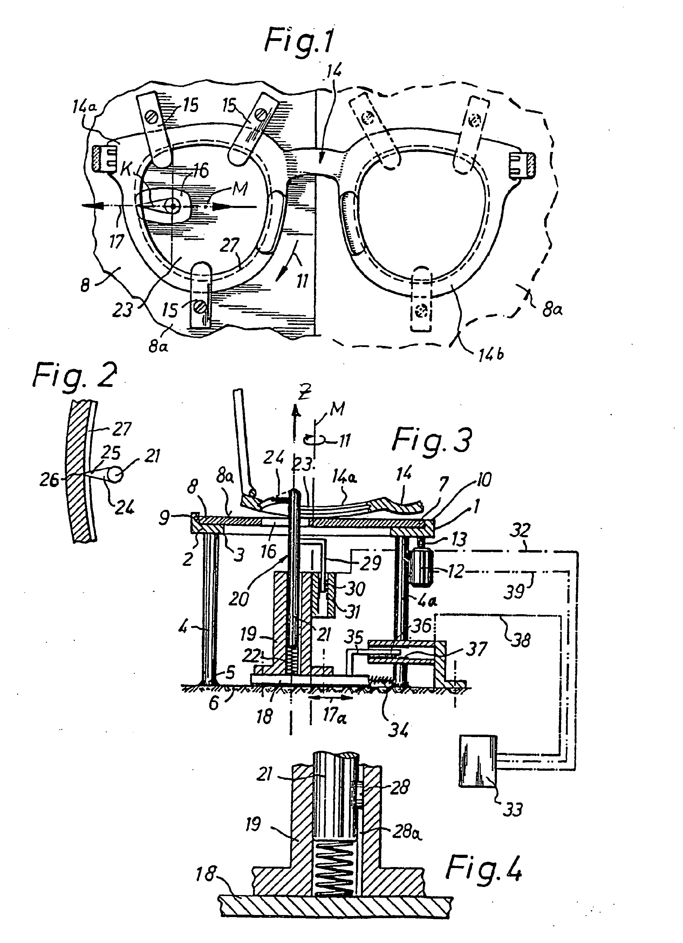

Die Platte 8 hat einen Durchmesser, der in der Lage ist, die eine Hälfte 14a einer Brillenfassung 14 zu tragen. Die Platte 8 kann auch ein Ausmaß haben, wodurch die gesamte Brillenfassung, das heißt, auch die Brillenfassung 14b auf der Platte aufliegt, zum Beispiel auf der Plattenhälfte 8a nach Fig. 1.

Die Brillenfassung 14 bzw. dessen Hälfte 14a wird durch Klemm- und Spannelemente 15 unverrückbar auf die Oberfläche 8a der Platte 8 gedrückt, die in Nähe ihrer Mittelachse M ein Lang- oder Ovalloch 16 aufweist, das vorzugsweise längliche oder ovale Form hat und deren Längsachse K in Richtung des Doppelpfeils 17 (Fig. 1) gelegen ist.

Auf der Unterlage 8 ist ein Schlitten 18 in Richtung des Doppelpfeils 17a (Fig. 3) parallel zur Längsachse K des Lang- oder Ovallochs in der Platte 8 verstellbar. Auf dem Schlitten 18, der einen Tragteil für die darauf angeordnete Buchse 19 bildet, ist die mit der allgemeinen Bezugsziffer 20 versehene Tasteinrichtung angebracht. Diese weist eine senkrechte Taststange 21 auf, die in der Buchse 19 in Richtung der Z-Achse auf- und abbewegbar und dort geführt ist sowie unter Wirkung einer Feder 22 steht, deren eines Widerlager die Oberseite des Schlittens 18 und deren anderes Widerlager die untere Stirnkante der Stange 21 bildet. Die Stärke der Feder 22 ist so gewählt, dass sie das Eigengewicht der Stange 21 ausgleicht oder weitgehend ausgleicht.

Das obere Ende der Taststange 21 ragt durch das Loch 18 der Platte 8 und durch die Öffnung 23 der Brillenfassungshälfte 14a. Es trägt oberhalb der Platte 8 einen Taststift 24, dessen Längsachse parallel zur Richtung des die Bewegung des Schlittens 18 kennzeichnenden Doppelpfeils 17a gelegen ist, der eine längliche, fingerartige Ausbildung hat und entweder, wie in ausgezogener Linie in Fig. 3 erkennbar ist, leicht nach unten gebogen ist oder aber, wie strichpunktiert in Fig. 3 gezeigt ist, eine gerade Ausführung mit gleichfalls nach unten gerichtetem Ende besitzt. Das freie Ende 25 des Taststifts 24 besitzt spitzwinklig zueinander gelegene Seitenflächen und eine abgerundete Tastspitze 26, mit der der Taststift 24 am Nutengrund 27 der Öffnung 23 der Brillenfassungshälfte 14a gleitet, wenn die Platte 8 mit Hilfe des Motors 12 um die Achse M gedreht wird. Hierbei ist die längsverschiebliche Taststange 21 mit dem Taststift 24 undrehbar verbunden und die längsverschiebliche Taststange 21 über einen Nutenkeil 28, der in eine Nut 28a der Büchse 19 eingreift, gegen Drehen gesichert.

Die Taststange 21 trägt einen Ansatz, zum Beispiel in Form eines Winkelstückes 29, dessen freies Ende 30 als Schleiffinger in ein Potentiometer 31 oder als Anker in eine elektromagnetische Spule derart eintaucht, dass mit dem Verstellen der Taststange 21 und des parallel dazu gerichteten Schenkels des Winkelstücks 29 ein der Höhenlage des Taststifts 24 entsprechender Messwert über die Leitung 32 einer Auswerte- und Steuereinheit 33 als Z-Achswert zugeführt wird.

Auf dem Schlitten 18, an dem in Richtung des Doppelpfeils 17 eine Feder 34 angreift, deren Widerlager durch den Schlitten 18 und die Stütze 4a zum Beispiel gebildet wird, ist ein weiteres Winkelstück 35 vorgesehen, dessen freier Arm 36 als Anker in einer elektromagnetischen Spule oder als Schleiffinger in einem Potentiometer 37 gleitet, wodurch ein weiterer Steuerimpuls über die Leitung 38 der Auswerte- und Steuereinheit 33 zugeführt wird, der der Horizontalstellung des Taststifts 24 entspricht. Die Auswerte- und Steuereinheit 33 empfängt daher dreidimensionale Messwerte der genannten Weggeber 30, 31 und 36, 37, die dem Verstellen der Taststange 21 in einer senkrecht zur Brillengestellöffnung gelegenen Ebene entsprechen und ferner in der senkrecht zu dieser Ebene gelegenen horizontalen Richtung.

Der Motor 12 der Platte 8 ist als Winkelgeber über die Leitung 39 ebenfalls mit der Auswerte- und Steuereinheit 33 verbunden, so dass von dieser nicht nur die beiden vorstehend genannten Daten der Bewegung des fingerartigen Taststifts 24 in zu der Stange 21 axialer und hierzu senkrechter Richtung aufgenommen und gespeichert werden, vielmehr auch die Werte der jeweiligen Winkelstellung der Platte 8 gegenüber einer Null- oder Ausgangsstellung.

Beim Drehen der Platte wird das Winkelmaß α den Daten der Messwertgeber 30, 31 und 36, 37 in der Auswerte- und Steuereinheit 33 zugeordnet, so dass jeder Punkt der Brillenfassungsöffnung 23 bzw. des Nutengrundes 27 durch drei Messwerte bestimmt ist. Dieses Messwerte lassen sich an einer CNC-gesteuerten Brillenglasrandschleifmaschine unmittelbar oder nach Speicherung reproduzieren und steuern die Teile der Schleifmaschine zum Umfangsschleifen ohne Anwendung einer Schablone in drei Achsen.

Die Auswerte- und Steuereinheit ist so programmiert, dass sie aus den Daten der Messwertgeber 30, 31 und 36, 37 die dreidimensionale Kontur der Brillenfassungsöffnung, die Radialgeschwindigkeit oder die Radialbeschleunigung und/oder die Geschwindigkeit oder Beschleunigung in Richtung der Z-Achse des Taststifts 24 relativ zur Brillenfassungsöffnung 23 berechnet. Aus diesen Werten erzeugt die Auswerte- und Steuereinheit 33 Steuerbefehle an den Motor 12 in der Weise, dass die Drehgeschwindigkeit des Taststifts 24 relativ zur Brillenfassungsöffnung 23 in Abhängigkeit von der Radialgeschwindigkeit oder Radialbeschleunigung und/oder der Geschwindigkeit oder Beschleunigung in Richtung der Z-Achse des Taststifts 24 relativ zur Brillenfassungsöffnung 23 so verändert wird, dass die Radialgeschwindigkeit oder die Radialbeschleunigung und/oder die Geschwindigkeit oder Beschleunigung in Richtung der Z-Achse innerhalb vorgebbarer Grenzen bleiben. Insbesondere wird die Drehgeschwindigkeit des Taststifts 24 relativ zur Brillenfassungsöffnung 23 herabgeregelt, wenn die Radialgeschwindigkeit und/oder die Geschwindigkeit in Richtung der Z-Achse des Taststifts bei sich vergrößerndem Radius und/oder des Z-Achswerts zunehmen und wird die Drehgeschwindigkeit des Taststifts 24 relativ zur Brillenfassungsöffnung 23 auch herabgeregelt, wenn die Radialgeschwindigkeit und/oder die Geschwindigkeit in Richtung der Z-Achse des Taststifts nach einem Nulldurchgang und sich verkleinerndem Radius und/oder Z-Achswert zunehmen.

Werden die Radial- und Z-Achswerte zusammen berücksichtigt, berechnet die Auswerte- und Steuereinheit die Vektorresultierende dieser Werte und regelt die Drehgeschwindigkeit entsprechend.

Bei einer konstanten Drehgeschwindigkeit ergibt sich nämlich bei den heute modernen, langen, flachen und ziemlich eckigen oder stark durchmuschelten Formen der Brillenfassungen das Problem, dass die Taststiftspitze in eine Ecke fällt oder in Richtung der Z-Achse stark beschleunigt wird, wobei sich hohe radiale und/oder dazu senkrechte Geschwindigkeiten ergeben. Im weiteren Verlauf wird die Taststiftspitze dann durch die konstante Drehgeschwindigkeit mit großer Kraft aus der Ecke herausgedrückt, so dass sich durch die Eckengestaltung hohe Querkräfte bilden, die die Genauigkeit der Abtastung durch Verformung der Brillenfassung beeinträchtigen. Ähnliches ergibt sich bei starker Durchmuschelung der Brillenfassung. Dementsprechend wird die Drehgeschwindigkeit des Taststifts 24 durch die Auswerte- und Steuereinheit 33 so geregelt, dass der Taststift 24 während des Umlaufs mit einem einstellbaren Druck in der Nut 27 der Brillenfassungsöffnung 23 anliegt, so dass der Taststift 24 weder bei sich vergrößerndem Radius aus der Nut 27 abhebt, noch bei sich verkleinerndem Radius eine unzulässige Verformung der Brillenfassung 14 eintritt.

Da die Auswertung der Positionsdaten und die Regelung der Drehgeschwindigkeit in Echtzeit hohe Anforderungen an die Ausleseelektronik 12; 30, 31; 36, 37 und das Rechnerprogramm der Auswerte- und Steuereinheit 33 stellt, ist es möglich, dieses Problem zu vermeiden, indem ein erstes Abtasten der dreidimensionalen Kontur der Brillenfassung 14 mit geregelter Drehgeschwindigkeit des Taststifts 24 so durchgeführt wird, dass der Taststift 24 während eines Umlaufs mit einem einstellbaren Druck in der Brillenfassungsöffnung 23, ohne aus der Nut 27 abzuheben und/oder eine unzulässige Verformung der Brillenfassung 14 zu bewirken, anliegt, wobei gewisse Ungenauigkeiten in Kauf genommen werden. Daraus berechnet die Auswerte- und Steuereinheit 33 eine optimale Abtastgeschwindigkeit, mit der ein zweites, besonders genaues Abtasten mit dieser optimalen, konstanten Abtastgeschwindigkeit erfolgt. Obwohl hierbei das Abtasten in zwei Durchläufen erfolgt, ist damit einerseits eine verbesserte Genauigkeit verbunden, ohne dass der apparative und rechnerische Aufwand übermäßig steigen und lässt sich die Abtastgeschwindigkeit gegenüber bekannten Vorrichtungen steigern, weil bei diesen Abtastvorrichtungen häufig drei oder mehr Durchläufe mit jedes Mal verminderter Geschwindigkeit erforderlich sind, bis eine einwandfreie Abtastung, ohne dass der Taststift aus der Nut abhebt und eine unzulässige Verformung der Brillenfassung eintritt, erreicht wird.

## Patentansprüche

1. Verfahren zum Abtasten der Kontur von Brillenfassungsöffnungen für das Umfangsschleifen von Brillengläsern mittels einer Abtastvorrichtung mit einer Einspannvorrichtung für die Brillenfassung, wenigstens einem in der Nut in der Brillenfassungsöffnung anliegenden, relativ zur Brillenfassungsöffnung drehbaren und antreibbaren und relativ zur Brillenfassungsöffnung radial und senkrecht dazu in Richtung der Z-Achse einstellbaren Taststift, einer Radialpositionssensoreinheit zum Aufnehmen der Radialbewegung des Taststifts relativ zur Brillenfassungsöffnung, einer Z-Achsenpositionssensoreinheit zum Aufnehmen der Position des Taststifts senkrecht zur Brillenfassungsebene, einer Winkelpositionssensoreinheit zum Aufnehmen der Winkelposition zu jeder Radial- und Z-Achsenposition und einer Auswerte- und Steuereinheit, die aus den Ausgangssignalen der Radialpositionssensoreinheit, der Z-Achsenpositionssensoreinheit und der Winkelpositionssensoreinheit die Kontur der Brillenfassungsöffnung berechnet, **dadurch gekennzeichnet, dass** die Drehgeschwindigkeit des Taststifts relativ zur Brillenfassungsöffnung in Abhängigkeit von der Radialgeschwindigkeit oder Radialbeschleunigung und/oder der Geschwindigkeit oder Beschleunigung in Richtung der Z-Achse des Taststifts durch die Auswerte- und Steuereinheit so geregelt wird, dass die Radialgeschwindigkeit oder Radialbeschleunigung und/oder die Geschwindigkeit oder Beschleunigung in Richtung der Z-Achse des Taststifts innerhalb vorgebbarer Grenzen bleiben.

2. Verfahren nach Anspruch 1, bei dem die Drehgeschwindigkeit des Taststifts relativ zur Brillenfassungsöffnung vermindert wird, wenn die Radialgeschwindigkeit und/oder die Geschwindigkeit in Richtung der Z-Achse bei sich vergrößerndem Radius und/oder Z-Achswert des Taststifts zunehmen.

3. Verfahren nach Anspruch 1 oder 2, bei dem die Drehgeschwindigkeit des Taststifts vermindert wird, wenn die Radialgeschwindigkeit und/oder die Geschwindigkeit in Richtung der Z-Achse nach einem Nulldurchgang und sich verkleinerndem Radius und/oder Z-Achswert zunehmen.

4. Verfahren nach einem der der Ansprüche 1 bis 3, bei dem ein erstes Abtasten der dreidimensionalen Kontur der Brillenfassung mit geregelt veränderlicher Drehgeschwindigkeit des Taststifts erfolgt, die Auswerte- und Steuereinheit aus den so ermittelten Radial- und Z-Achswerten eine optimale Abtastgeschwindigkeit berechnet und damit ein zweites, genaues Abtasten mit der optimalen konstanten Abtastgeschwindigkeit durchgeführt wird.

5. Vorrichtung zum Abtasten der Kontur von Brillenfassungsöffnungen (23) für das Umfangsschleifen von Brillengläsern mit einer Einspannvorrichtung (8, 15) für die Brillenfassung (14), wenigstens einem, in der Nut (27) in der Brillenfassungsöffnung (23) anliegenden, relativ zur Brillenfassungsöffnung (23) drehbaren und relativ zur Brillenfassungsöffnung (23) radial und senkrecht dazu in Richtung der Z-Achse einstellbaren Taststift (24), einer Radialpositionssensoreinheit (36, 37) zum Aufnehmen der Radialbewegung des Taststifts (24) relativ zur Brillenglasöffnung (23), einer Z-Achsenpositionssensoreinheit (30, 31) zum Aufnehmen der Position des Taststifts (24) senkrecht zur Brillenfassungsebene, einer Winkelpositionssensoreinheit (12) zum Aufnehmen der Winkelposition zu jeder Radial- und Z-Achsenposition und einer Auswerte- und Steuereinheit (33), die aus den Ausgangssignalen der Radialpositionssensoreinheit (36, 37), der Z-Achsenpositionssensoreinheit (30, 31) und der Winkelpositionssensoreinheit (12) die Kontur der Brillenfassungsöffnung (23) berechnet, **dadurch gekennzeichnet, dass** die Auswerte- und Steuereinheit (33) so programmiert ist, dass sie aus den Ausgangssignalen der Radialpositionssensoreinheit (36, 37) die Radialgeschwindigkeit oder die Radialbeschleunigung und/oder aus den Ausgangssignalen der Z-Achsenpositionssensoreinheit (30, 31) die Geschwindigkeit oder Beschleunigung in Richtung der Z-Achse des Taststifts (24) relativ zur Brillenfassungsöffnung (23) berechnet und die Drehgeschwindigkeit des Taststifts (24) relativ zur Brillenfassungsöffnung (23) in Abhängigkeit von der Radialgeschwindigkeit oder der Radialbeschleunigung und/oder der Geschwindigkeit oder Beschleunigung in Richtung der Z-Achse des Taststifts (24) relativ zur Brillenfassungsöffnung (23) so regelt, dass die Radialgeschwindigkeit oder die Radialbeschleunigung und/oder die Geschwindigkeit oder Beschleunigung in Richtung der Z-Achse innerhalb vorgebbarer Grenzen bleiben.

6. Vorrichtung nach Anspruch 5, bei der die Auswerte- und Steuereinheit (33) so programmiert ist, dass sie die Drehgeschwindigkeit des Taststifts (24) relativ zur Brillenfassungsöffnung (23) herabregelt, wenn die Radialgeschwindigkeit und/oder die Geschwindigkeit in Richtung der Z-Achse des Taststifts (24) bei sich vergrößerndem Radius und/oder Z-Achswert zunehmen.

7. Vorrichtung nach Anspruch 5 oder 6, bei der die Auswerte- und Steuereinheit (33) so programmiert ist, dass sie die Drehgeschwindigkeit des Taststifts (24) relativ zur Brillenfassungsöffnung (23) herabregelt, wenn die Radialgeschwindigkeit und/oder die Geschwindigkeit oder Beschleunigung in Richtung der Z-Achse des Taststifts (24) nach einem Nulldurchgang und sich verkleinerndem Radius und/oder Z-Achswert zunehmen.

8. Vorrichtung nach Anspruch 6 oder 7, bei der die Auswerte- und Steuereinheit (33) so programmiert ist, dass sie die Drehgeschwindigkeit so regelt, dass der Taststift (24) während eines Umlaufs mit einem einstellbaren Druck in der Nut (27) der Brillenfassungsöffnung (23) anliegt, so dass der Taststift (24) weder aus der Nut (27) abhebt noch eine unzulässige Verformung der Brillenfassung (14) eintreten

## Claims

1. A method of scanning the contours of openings in a spectacles frame for the peripheral grinding of spectacles lenses by means of a scanning device with a clamping device for the spectacles frame, at least one sensor pin which rests in the groove in the opening in the spectacles frame and is rotatable and drivable relative to the opening in the spectacles frame and which is adjustable radially relative to the opening in the spectacles frame and at a right angle thereto in the direction of the Z axis, a radial-position sensor unit for recording the radial movement of the sensor pin relative to the opening in the spectacles frame, a Z-axis-position sensor unit for recording the position of the sensor pin at a right angle to the plane of the spectacles frame, an angular-position sensor unit for recording the angular position at each radial position and Z-axis position and an evaluation and control unit which calculates the contour of the opening in the spectacles frame from the output signals of the radial-position sensor unit, the Z-axis-position sensor unit and the angular-position sensor unit, **characterized in that** the rotational speed of the sensor pin relative to the opening in the spectacles frame is regulated by the evaluation and control unit in a manner dependent upon the radial speed or radial acceleration and/or the speed or acceleration in the direction of the Z axis of the sensor pin, in such a way that the radial speed or radial acceleration and/or the speed or acceleration in the direction of the Z axis of the sensor pin remains or remain within pre-settable limits.

2. A method according to claim 1, wherein the rotational speed of the sensor pin relative to the opening in the spectacles frame is reduced when the radial speed and/or the speed in the direction of the Z axis increases or increase with an increase in the radius and/or the Z-axis value of the sensor pin.

3. A method according to claim 1 or 2, wherein the rotational speed of the sensor pin is reduced when the radial speed and/or the speed in the direction of the Z axis increases or increase after a zero crossing and a decrease in the radius and/or the Z-axis value.

4. A method according to any one of claims 1 to 3,
wherein a first scanning of the three-dimensional contour of the spectacles frame is carried out with a rotational speed of the sensor pin which is variable in a regulated manner, the evaluation and control unit calculates an optimum scanning speed from the radial and Z-axis values determined in this way, and so a second precise scanning is carried out at the optimum constant scanning speed.

5. A device for scanning the contours of openings (23) in a spectacles frame for the peripheral grinding of spectacles lenses with a clamping device (8, 15) for the spectacles frame (14), at least one sensor pin (24) which rests in the groove (27) in the opening (23) in the spectacles frame and is rotatable relative to the opening (23) in the spectacles frame and which is adjustable radially relative to the opening (23) in the spectacles frame and at a right angle thereto in the direction of the Z axis, a radial-position sensor unit (36, 37) for recording the radial movement of the sensor pin (24) relative to the opening (23) in the spectacles frame, a Z-axis-position sensor unit (30, 31) for recording the position of the sensor pin (24) at a right angle to the plane of the spectacles frame, an angular-position sensor unit (12) for recording the angular position at each radial position and Z-axis position and an evaluation and control unit (33) which calculates the contour of the opening (23) in the spectacles frame from the output signals of the radial-position sensor unit (36, 37), the Z-axis-position sensor unit (30, 31) and the angular-position sensor unit (12), **characterized in that** the evaluation and control unit (33) is programmed in such a way that it calculates the radial speed or the radial acceleration from the output signals of the radial-position sensor unit (36, 37) and/or the speed or acceleration in the direction of the Z axis of the sensor pin (24) relative to the opening (23) in the spectacles frame from the output signals of the Z-axis-position sensor unit (30, 31), and it regulates the rotational speed of the sensor pin (24) relative to the opening (23) in the spectacles frame in a manner dependent upon the radial speed or the radial acceleration and/or the speed or acceleration in the direction of the Z axis of the sensor pin (24) relative to the opening (23) in the spectacles frame in such a way that the radial speed or the radial acceleration and/or the speed or acceleration in the direction of the Z axis remains or remain within pre-settable limits.

6. A device according to claim 5, wherein the evaluation and control unit (33) is programmed in such a way that it reduces the rotational speed of the sensor pin (24) relative to the opening (23) in the spectacles frame when the radial speed and/or the speed in the direction of the Z axis of the sensor pin (24) increases or increase with an increase in the radius and/or the Z-axis value.

7. A device according to claim 5 or 6, wherein the evaluation and control unit (33) is programmed in such a way that it reduces the rotational speed of the sensor pin (24) relative to the opening (23) in the spectacles frame when the radial speed and/or the speed or acceleration in the direction of the Z axis of the sensor pin (24) increases or increase after a zero crossing and a decrease in the radius and/or the Z-axis value.

8. A device according to claim 6 or 7, wherein the evaluation and control unit (33) is programmed in such a way that it regulates the rotational speed in such a way that during one revolution the sensor pin (24) rests with an adjustable pressure in the groove (27) in the opening (23) in the spectacles frame so that neither the sensor pin (24) rises up out of the groove (27) nor an impermissible deformation of the spectacles frame (14) occurs.

## Revendications

1. Procédé de palpage du contour d'ouvertures de monture de lunettes pour le polissage circonférentiel de verres de lunettes, au moyen d'un dispositif de palpage, avec un dispositif de serrage pour la monture de lunettes, au moins un palpeur appliqué dans la rainure dans l'ouverture de monture de lunettes, pouvant être amené à tourner et entraîné par rapport à l'ouverture de monture de lunettes et étant réglable par rapport à l'ouverture de monture de lunettes de façon radiale et verticale à celle-ci en direction de l'axe Z, une unité de capteur de position radiale pour saisir le mouvement radial du palpeur par rapport à l'ouverture de monture de lunettes, une unité de capteur de position d'axe Z pour saisir la position du palpeur verticalement au plan de monture de lunettes, une unité de capteur de position d'angle pour saisir la position d'angle à chaque position radiale et position d'axe Z, et une unité d'évaluation et de commande qui calcule à partir des signaux de sortie de l'unité de capteur de position radiale, de l'unité de capteur de position d'axe Z et de l'unité de capteur de position d'angle le contour de l'ouverture de monture de lunettes, **caractérisé en ce que** la vitesse de rotation du palpeur par rapport à l'ouverture de monture de lunettes est réglée en fonction de la vitesse radiale ou de l'accélération radiale et/ou de la vitesse ou de l'accélération en direction de l'axe Z du palpeur par l'unité d'évaluation ou de commande de telle sorte que la vitesse radiale ou accélération radiale et/ou la vitesse ou accélération en direction de l'axe Z du palpeur reste(nt) dans des limites prédéfinissables.

2. Procédé selon la revendication 1, dans lequel la vitesse de rotation du palpeur par rapport à l'ouverture de monture de lunettes est diminuée lorsque la vitesse radiale et/ou la vitesse augmente(nt) en direction de l'axe Z avec un rayon et/ou une valeur d'axe Z croissant(e)s du palpeur.

3. Procédé selon les revendications 1 ou 2, dans lequel la vitesse de rotation du palpeur est diminuée lorsque la vitesse radiale et/ou la vitesse en direction de l'axe Z augmente(nt) après un passage par zéro et avec un rayon et/ou une valeur d'axe Z décroissant(e)s.

4. Procédé selon l'une quelconque des revendications 1 à 3, dans lequel un premier palpage du contour tridimensionnel de la monture de lunettes est effectué à une vitesse de rotation variable de façon régulée, l'unité d'évaluation et de commande calcule à partir des valeurs radiales et d'axe Z ainsi déterminées une vitesse de palpage optimale et un deuxième palpage précis est ainsi effectué à la vitesse de palpage constante optimale.

5. Procédé de palpage du contour d'ouvertures de monture de lunettes (23) pour le polissage circonférentiel de verres de lunettes avec un dispositif de serrage (8, 15) pour la monture de lunettes (14), au moins un palpeur (24) appliqué dans la rainure (27) dans l'ouverture de monture de lunettes (23), pouvant être amené à tourner par rapport à l'ouverture de monture de lunettes (23) et étant réglable par rapport à l'ouverture de monture de lunettes (23) radialement et verticalement à celle-ci en direction de l'axe Z, une unité de capteur de position radiale (36, 37) pour saisir le mouvement radial du palpeur (24) par rapport à l'ouverture de monture de lunettes (23), une unité de capteur de position d'axe Z (30, 31) pour saisir la position du palpeur (24) verticalement au plan de monture de lunettes, une unité de capteur de position d'angle (12) pour saisir la position d'angle à chaque position radiale et position d'axe Z, et une unité d'évaluation et de commande (33) qui calcule à partir des signaux de sortie de l'unité de capteur de position radiale (36, 37), de l'unité de capteur de position d'axe Z (30, 31) et de l'unité de capteur de position d'angle (12) le contour de l'ouverture de monture de lunettes (23), **caractérisé en ce que** l'unité d'évaluation et de commande (33) est programmée de telle sorte qu'elle calcule à partir des signaux de sortie de l'unité de capteur de position radiale (36, 37) la vitesse radiale ou l'accélération radiale et/ou calcule à partir des signaux de sortie de l'unité de capteur de position d'axe Z (30, 31) la vitesse ou accélération en direction de l'axe Z du palpeur (24) par rapport à l'ouverture de monture de lunettes (23) et régule la vitesse de rotation du palpeur (24) par rapport à l'ouverture de monture de lunettes (23) en fonction de la vitesse radiale ou de l'accélération radiale et/ou de la vitesse ou accélération en direction de l'axe Z du palpeur (24) par rapport à l'ouverture de monture de lunettes (23) de telle sorte que la vitesse radiale ou l'accélération radiale et/ou la vitesse ou accélération en direction de l'axe Z reste(nt) dans des limites prédéfinissables.

6. Dispositif selon la revendication 5, dans lequel l'unité d'évaluation et de commande (33) est programmée de telle sorte qu'elle diminue la vitesse de rotation du palpeur (24) par rapport à l'ouverture de monture de lunettes (23) lorsque la vitesse radiale et/ou la vitesse en direction de l'axe Z du palpeur (24) augmente(nt) avec un rayon et/ou une valeur d'axe Z croissant(e)s.

7. Dispositif selon les revendications 5 ou 6, dans lequel l'unité d'évaluation et de commande (33) est programmée de telle sorte qu'elle diminue la vitesse de rotation du palpeur (24) par rapport à l'ouverture de monture de lunettes (23) lorsque la vitesse radiale et/ou la vitesse ou l'accélération augmente(nt) en direction de l'axe Z du palpeur (24) après un passage par zéro et avec un rayon et/ou une valeur d'axe Z décroissant(e)s.

8. Dispositif selon les revendications 6 ou 7, dans lequel l'unité d'évaluation et de commande (33) est programmée de telle sorte qu'elle règle la vitesse de rotation de telle sorte que le palpeur (24) s'applique pendant un tour avec une pression réglable dans la rainure (27) de l'ouverture de monture de lunettes (23) de telle sorte que le palpeur (24) ne décolle pas de la rainure (27) et qu'aucune déformation inadmissible de la monture de lunettes (14) ne se produit.
